# EUROPEAN PATENT APPLICATION

(11) **EP 4 745 389 A1**
(43) Date of publication of application: **20.05.2026**
(21) Application number: 25215695.5
(22) Date of filing: 13.11.2025
(51) Int. Cl.: F02K 1/82, F01D 9/06, F01D 25/04, F02K 3/06

(54) **DAMPED FAIRING ASSEMBLY**

(30) Priority: 14.11.2024 US 202418947184
(71) Applicant: Pratt & Whitney Canada Corp., (01BE5) Longueuil, QC J4G 1A1 (CA)
(72) Inventor: FISH, Jason, J4G 1A1(01BE5) Longueuil (CA)
(74) Representative: Dehns

(57) **Abstract**

A bypass duct (22) of a turbofan gas turbine engine (10) includes a first shroud (26) extending at least partially around an axis (A) and a second shroud (24) extending at least partially around the axis (A), the second shroud (24) being radially spaced apart from the first shroud (26) to define a bypass passage between the first (26) and second (24) shrouds. The bypass duct (22) further includes a fairing (12,12',12") disposed in the bypass passage. The fairing (12,12',12") includes a first outer shell (32A,32A',32A") and a second outer shell (32B,32B',32B") defining therebetween an internal passage (30,30',30"). The first (32A,32A',32A") and second (32B,32B',32B") outer shells extend radially from the first shroud (26) to the second shroud (24). A plate (40,40',40") extends across the internal passage (30,30',30") between the first (32A,32A',32A") and second (32B,32B',32B") outer shells. A damper (42,42',42") is engaged with the plate (40,40',40") between the first (32A,32A',32A") and second (32B,32B',32B") outer shells.

## Description

### TECHNICAL FIELD

The disclosure relates generally to gas turbine engines, and more particularly to fairings disposed in bypass ducts of turbofan gas turbine engines.

### BACKGROUND

A fairing may be disposed in a bypass duct of a turbofan gas turbine engine to provide an outer aerodynamic shell around a structural strut extending across the bypass duct or around service connections routed through the bypass duct. Fairings are typically designed to have a stiffness sufficiently high to resists static and dynamic loads during operation of the gas turbine engine. As a result, fairings typically have a relatively stiff and heavy construction. Improvements are desirable.

### SUMMARY

According to one aspect of the present invention, there is provided a bypass duct of a turbofan gas turbine engine, the bypass duct comprising: a first shroud extending at least partially around an axis; a second shroud extending at least partially around the axis, the second shroud being radially spaced apart from the first shroud to define a bypass passage between the first and second shrouds; and a fairing disposed in the bypass passage, the fairing including: a first outer shell and a second outer shell defining therebetween an internal passage, the first and second outer shells extending radially from the first shroud to the second shroud; a plate extending across the internal passage between the first and second outer shells; and a damper engaged with the plate between the first and second outer shells.

The bypass duct described above may include any of the following features, in any combinations.

Optionally, and in accordance with the above, a first said plate extends from the first outer shell and a second said plate extends from the second outer shell, the first said plate engaging the second said plate via the damper.

Optionally, and in accordance with any of the above, the damper is coupled to a distal end of the first said plate and engages a distal end of the second said plate, the damper compressible between the distal end of the first said plate and the distal end of the second said plate.

Optionally, and in accordance with any of the above, the damper is a spring damper or an elastomeric damper disposed between the distal end of the first said plate and the distal end of the second said plate, the damper compressible in a direction in line with the first said plate and the second said plate and transversal to the first and second outer shells of the fairing.

Optionally, and in accordance with any of the above, the damper is radially disposed between the first said plate and the second said plate towards the distal end of the first said plate and the distal end of the second said plate.

Optionally, and in accordance with any of the above, the damper is an elastomeric damper coupled to an underside of the first said plate towards the distal end of the first said plate and engaging a top side of the second said plate towards the distal end of the second said plate.

Optionally, and in accordance with any of the above, the plate engages the first outer shell and the second outer shell, the plate coupled to the first outer shell via the damper.

Optionally, and in accordance with any of the above, the bypass duct further includes a fastener coupling the first outer shell and the plate, wherein the damper includes a wave spring coupled to the fastener and damping movement between the first outer shell and the plate.

Optionally, and in accordance with any of the above, the bypass duct further includes a second said damper coupling the plate to the second outer shell.

Optionally, and in accordance with any of the above, the bypass duct further includes a second said plate disposed between the first and second outer shells, the second said plate radially spaced apart from the plate and engaged with a second damper to dampen movement of the first and second outer shells.

According to another aspect of the present invention, there is provided a turbofan gas turbine engine comprising: a fan through which ambient air is propelled; a core including a compressor for pressurizing a first portion of the air propelled by the fan, a combustor in which the pressurized air is mixed with fuel and ignited for generating an annular stream of hot combustion gases, and a turbine section for extracting energy from the combustion gases; a bypass duct (optionally as defined in any of the above) defining a bypass passage at least partially surrounding the core for conveying a second portion of the air propelled by the fan, the bypass duct including: a first shroud extending at least partially around an axis; a second shroud extending at least partially around the axis, the second shroud being radially spaced apart from the first shroud to define a bypass passage between the first and second shrouds; and a fairing disposed in the bypass passage and extending between the first and second shrouds, the fairing including a first outer shell and a second outer shell with a gap defined between the first and second outer shells, the first and second outer shells extending radially between the first and second shrouds, the first and second outer shells supported by a frame, a plate disposed in the gap between the first and second outer shells, the plate engaged with a damper to dampen movement of the first and second outer shells.

The turbofan gas turbine engine described above may include any of the following features, in any combinations.

Optionally, and in accordance with any of the above, a first said plate extends from the first outer shell and a second said plate extends from the second outer shell, the first said plate engaging the second said plate via the damper.

Optionally, and in accordance with any of the above, the damper is coupled to a distal end of the first said plate and engages a distal end of the second said plate, the damper compressible between the distal end of the first said plate and the distal end of the second said plate.

Optionally, and in accordance with any of the above, the damper is a spring damper or an elastomeric damper disposed between the distal end of the first said plate and the distal end of the second said plate, the damper compressible in a direction in line with the first said plate and the second said plate.

Optionally, and in accordance with any of the above, the damper is radially disposed between the first said plate and the second said plate towards the distal end of the first said plate and the distal end of the second said plate.

Optionally, and in accordance with any of the above, the damper is an elastomeric damper coupled to an underside of the first said plate towards the distal end of the first said plate and engaging a top side of the second said plate towards the distal end of the second said plate.

Optionally, and in accordance with any of the above, the plate engages the first outer shell and the second outer shell, the plate coupled to the first outer shell via the damper.

Optionally, and in accordance with any of the above, the turbofan gas turbine engine further includes a fastener coupling the first outer shell and the plate, wherein the damper includes a wave spring coupled to the fastener and damping movement between the first outer shell and the plate.

Optionally, and in accordance with any of the above, the turbofan gas turbine engine further includes a second said plate disposed between the first and second outer shells, the second said plate radially spaced apart from the plate and engaged with a second damper to dampen movement of the first and second outer shells.

According to another aspect of the present invention, there is provided a method for mitigating vibrations of a fairing disposed in a bypass duct of a gas turbine engine, the fairing including outer shells extending between radially inner and outer shrouds in the bypass duct, the method comprising: receiving a flow of air in the bypass duct, the flow of air interacting with the fairing; and using a damper engaged with a plate extending between the outer shells to damp a vibration of the fairing induced by the flow of air in the bypass duct interacting with the fairing.

The method described above may include any of the following features, in any combinations.

Optionally, and in accordance with any of the above, the using the damper engaged with the plate extending between the outer shells includes using a first said plate extending from a first of the outer shells and a second said plate extending from a second of the outer shells, the first said plate engaging the second said plate via the damper, to damp the vibration of the fairing induced by the flow of air in the bypass duct interacting with the fairing.

Optionally, and in accordance with any of the above, the using the damper engaged with the plate extending between the outer shells includes using the plate engaging a first of the outer shells and a second of the outer shells, the plate coupled to the first of the outer shells via the damper, to damp the vibration of the fairing induced by the flow of air in the bypass duct interacting with the fairing.

Optionally, and in accordance with any of the above, the using the damper engaged with the plate extending between the outer shells includes using a second said plate disposed between the outer shells, the second said plate radially spaced apart from the plate and engaged with a second damper to dampen movement of the outer shells, to damp the vibration of the fairing induced by the flow of air in the bypass duct interacting with the fairing.

### BRIEF DESCRIPTION OF THE DRAWINGS

Reference is now made to the accompanying figures in which:
FIG. 1 shows a schematic axial cross-section view of a turbofan gas turbine engine including a fairing installation as described herein;
FIG. 2 is a perspective view of an exemplary fairing in the bypass duct of the engine of FIG. 1;
FIG. 3 is a cross-sectional view of the fairing of FIG. 2, taken along line III-III in FIG. 2;
FIG. 4 is a cross-sectional view of the fairing of FIG. 3 taken along line IV-IV in FIG. 3, according to an embodiment;
FIG. 5 is a cross-sectional view of the fairing of FIG. 3 taken along line IV-IV in FIG. 3, according to another embodiment; and
FIG. 6 is a cross-sectional view of the fairing of FIG. 3 taken along line IV-IV in FIG. 3, according to a further embodiment.

### DETAILED DESCRIPTION

The following disclosure describes fairing installations inside bypass ducts of turbofan gas turbines, and associated methods. The fairings are located in the bypass duct and are subjected to a bypass flow. As such, the fairings are designed to be aerodynamic to minimize losses. The fairings are further subjected to engine vibrations, which, along with the bypass flow, can introduce vibratory excitation that coincides with the fundamental modes of the fairings, creating potential for high vibratory loading and high stresses on the fairings. In some embodiments, the fairing installations described herein may provide improvements to such fairings. In some embodiments, the fairing includes one or more dampened stiffening plates between outer shells of the fairing, which may shift the modal frequencies of the system and provide damping to reduce stresses and improve durability. In some embodiments, the dampening may be tuned to provide a desired dynamic response in view of the specific fairing construction and operating conditions/loading to mitigate stresses and vibrations.

The terms "secured to" and "engaged with" may include both direct securement and engagement (in which two elements contact each other) and indirect securement and engagement (in which at least one additional element is located between the two elements). The term "substantially" as used herein may be applied to modify any quantitative representation which could permissibly vary without resulting in a change in the basic function to which it is related.

Aspects of various embodiments are described through reference to the drawings.

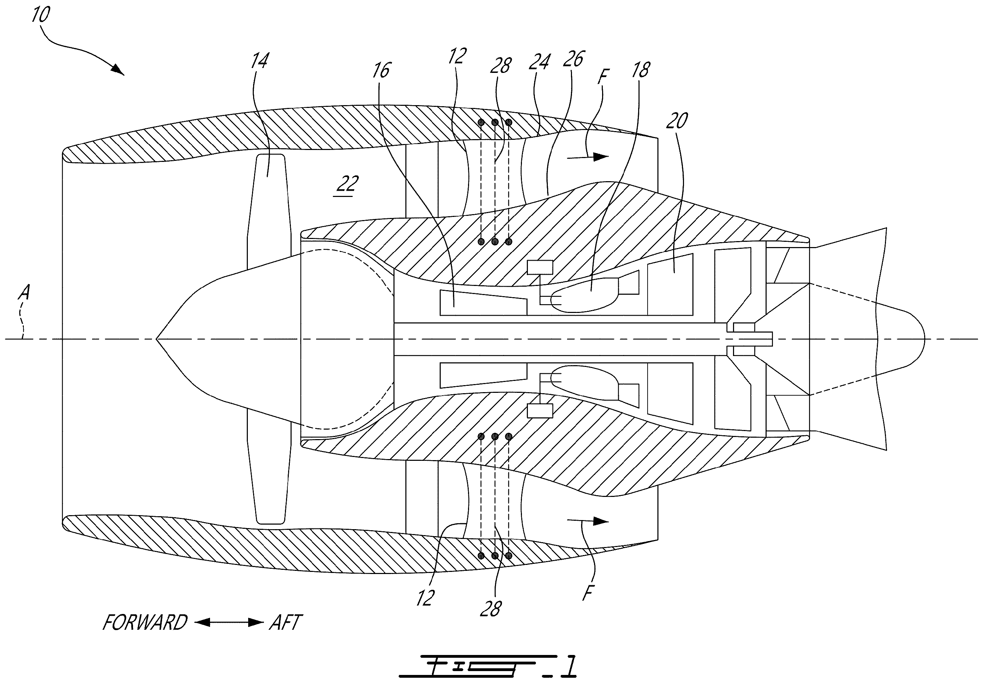

FIG. 1 shows a schematic axial cross-section view of turbofan gas turbine engine 10 (referred hereinafter as "engine 10") including one or more fairings 12 (referred hereinafter in the singular) as described herein. Engine 10 may be of a type preferably provided for use in subsonic flight, generally comprising in serial flow communication, fan 14 through which ambient air is propelled, multistage compressor 16 for pressurizing the air, combustor 18 in which the compressed air is mixed with fuel and ignited for generating an annular stream of hot combustion gases, and turbine section 20 for extracting energy from the combustion gases. FIG. 1 also shows FORWARD and AFT directions relative to engine 10. The FORWARD direction may correspond to a forward direction of travel of engine 10 when engine 10 is propelling a (e.g., fixed-wing) aircraft.

Compressor 16, combustor 18 and turbine section 20 may be considered part of the core of engine 10. The core may receive core air corresponding to a portion of the ambient air propelled by fan 14. Bypass air corresponding to another portion of the air propelled by fan 14 may be received into bypass duct 22 and conveyed along a passage defined by bypass duct 22. Bypass duct 22 may extend at least partially around the core of engine 10. Bypass duct 22 may be substantially annular about axis A, which may correspond to a centerline of engine 10. For example, axis A may correspond to an axis of rotation of fan 14. Axis A may correspond to an axis of rotation of one or more spools including compressor stage(s) and/or turbine stage(s) of the core of engine 10.

Bypass duct 22 may be defined by a radially-outer shroud 24 at least partially extending around axis A, and a radially-inner shroud 26 at least partially extending around axis A. Shrouds 24, 26 may be radially spaced apart from each other to define the passage of bypass duct 22 therebetween (i.e., a bypass passage), through which the bypass air may be conveyed. The flow of bypass air being conveyed through bypass duct 22 is illustrated by arrows F in FIG. 1.

Fairing 12 may be disposed in bypass duct 22. Two or more fairings 12 may be disposed at different angular and/or axial positions inside bypass duct 22. Fairing 12 may extend between radially-outer shroud 24 and radially-inner shroud 26. For example, fairing 12 may extend radially from radially-outer shroud 24 to radially-inner shroud 26 to cover an entire radial distance between radially-outer shroud 24 and radially-inner shroud 26. The term "radially" is intended to encompass orientations that have non-zero radial and axial vector components in relation to axis A and that are not perfectly radial. For example, it is understood that fairing 12 may extend perfectly radially or mainly radially (e.g., inclined relative to the radial direction).

In some embodiments, fairing 12 may be a type of service fairing, sometimes called "service tube fairing" extending radially across bypass duct 22. Accordingly, fairing 12 may permit the routing of one or more service connections 28 therethrough and radially across bypass duct 22. Service connections 28 may include one or more electric connections (e.g., cables, wires), hydraulic lines and/or fuel lines for example. Even though fairing 12 is illustrated herein as a service fairing as a non-limiting example, it is understood that aspects of the present disclosure are also applicable to other types of fairings including strut fairings that may surround a structural strut extending across bypass duct 22.

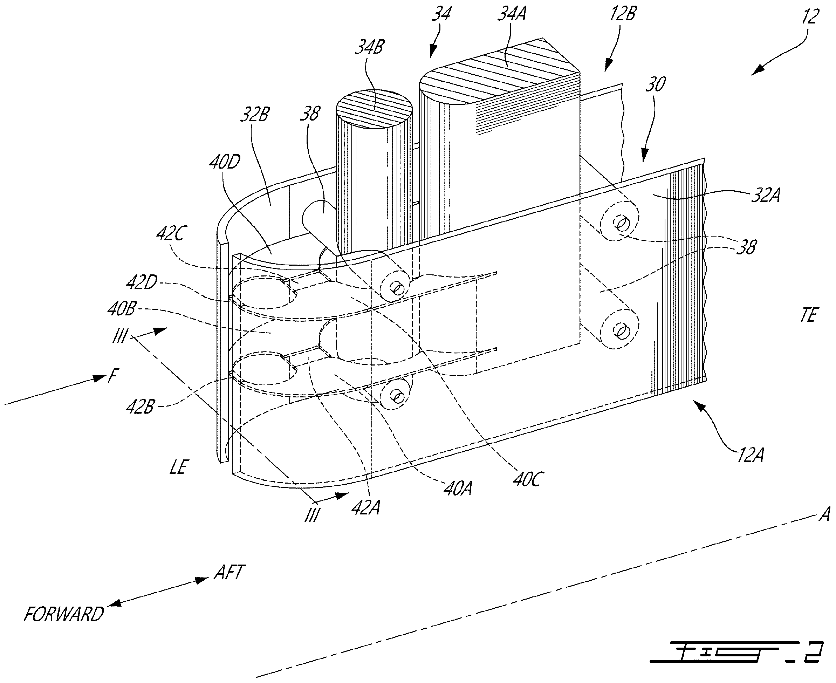

FIG. 2 shows an exemplary fairing 12 to be installed in the bypass duct 22 of engine 10. In some embodiments, fairing 12 is rigidly secured to the radially-outer shroud 24 and/or to the radially-inner shroud 26. In some cases, the fairing 12 is secured in a cantilevered manner, i.e., relatively unsecured to the radially-inner shroud 26 a first fairing end 12A and secured to the radially-outer shroud 24 at a second fairing end 12B. The opposite configuration is also contemplated.

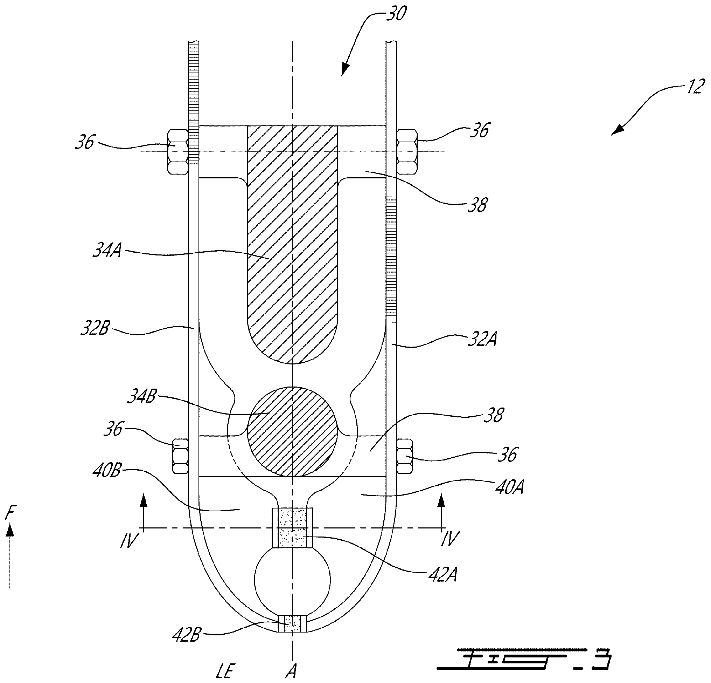

Fairing 12 illustratively defines an internal passage 30 that permits service connections 28 to be routed longitudinally through fairing 12 and radially across bypass duct 22. Fairing 12 may have leading (i.e., upstream) end LE relative to the flow F of bypass air, and trailing (i.e., downstream) end TE relative to the flow F of bypass air. The fairing 12 includes one or more (illustratively, two) shells 32A, 32B, also referred to as outer shells, defining a gap therebetween, thereby surrounding the internal passage 30 and supported by a frame 34. Shells 32A, 32B may define an aerodynamic outer skin of fairing 12. In some embodiments, shells 32A, 32B may, for example, be made (e.g., stamped) from a metallic material, or may be molded from a fibre-reinforced composite material. Shell 32A, 32B may be laterally opposed relative to axis A. In the shown case, the shells 32A, 32B are separated at their ends. In other cases, the shells 32A, 32B may meet at one or more locations. Shells 32A, 32B may be (e.g., releasably) secured to support members 34A, 34B of the frame 34. For example, shells 32A, 32B may be fastened to the support members 34A, 34B using fasteners 36 (see FIG. 3) engaging hollow shafts 38 coupled to the support members 34A, 34B. Other fastening arrangements, such as via rivets or welding, are contemplated.

Referring additionally to FIG. 3, a cross-sectional view of the fairing 12, taken along line III-III of FIG. 2, is shown. As discussed above, the fairing 12 is subject to bypass flow F and engine 10 vibrations, both of which can introduce vibratory excitation that coincides with the fundamental modes of the fairing 12, creating potential for high vibratory loading and high stresses on the fairings. As such, in accordance with embodiments of the present disclosures, one or more stiffening members 40 and one or more dampers 42 are included with the fairing 12 to provide additional stiffness as well as to shift the modal frequencies of the fairing 12, thereby reducing stresses and improving durability.

In the shown embodiment, the fairing includes one or more stiffening members 40, also referred to as stiffening plates 40, disposed between the shells 32A, 32B and extending generally transversely across the internal passage 30 for providing additional stiffness to the fairing 12. Illustratively, the fairing includes a first pair of adjacent plates 40A, 40B engaging the shells 32A, 32B, respectively, and a second pair of adjacent plates 40C, 40D engaging the shells 32A, 32B, respectively, and radially spaced apart from the first pair of plates 40A, 40B. Other numbers of plates 40 are contemplated. For instance, in some embodiments, the fairing includes additional pairs of plates 40 at other axial and/or radial locations within the internal passage 30. Additionally or alternatively, one or more single plates 40 extend from one shell 32A to the other shell 32B. Other arrangements are contemplated. In various embodiments, the plates 40 are positioned at locations near bending planes of the mode shape of the shells 32A, 32B, for instance at overhanging positions of the fairing 12.

The fairing 12 further includes one or more dampers 42 engaging the plates 40 and adapted to dampen movement between the shells 32A, 32B. Illustratively, two dampers 42A, 42B are disposed between and engage the first pair of plates 40A, 40B, and two additional dampers 42C, 42D are disposed between and engage the second pair of plates 40C, 40D. In other embodiments, other numbers of dampers 42 may be provided. Various types of dampers 42 are contemplated, as will be discussed below. The dampers 42 may be positioned and tuned to provide a desired level of dampening between the shells 32A, 32B.

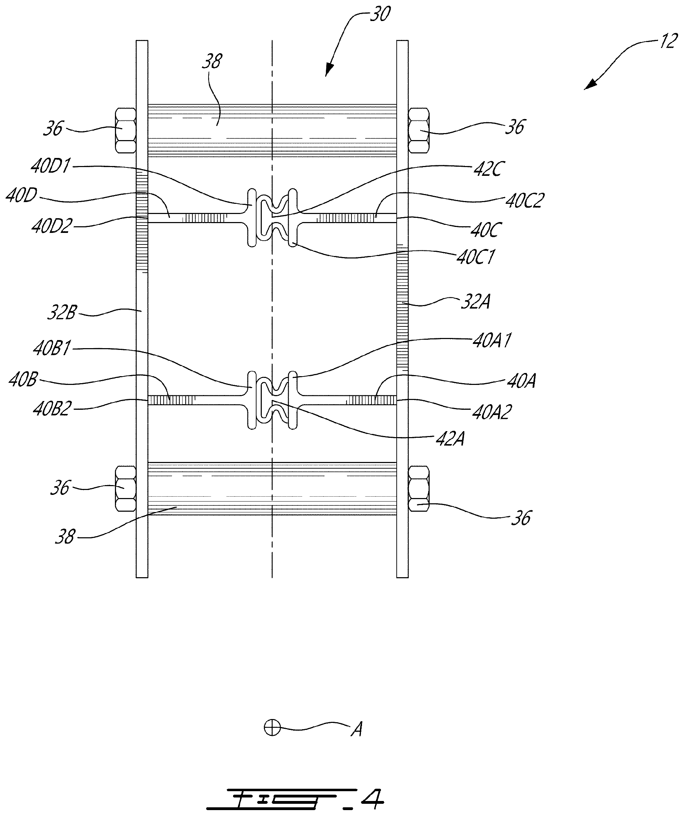

Referring to FIG. 4, an embodiment of a fairing 12 is shown in a cross-sectional view taken along line IV-IV in FIG. 3. In this view, two dampers 42A, 42C are shown. However, it is understood that two other dampers 42B, 42D are provided in this embodiment, as shown in FIG. 3, and the following description apply to them as well. In this embodiment, the damper 42A is coupled or fastened to a distal end 40A1 of the plate 40A and engaged in a non-secured manner to a distal end 40B1 of the plate 40B. Proximal ends 40A2, 40B2 of the plates 40A, 40B are secured to first and second shells 32A, 32B, respectively. Similarly, the damper 42C is coupled to a distal end 40C1 of the plate 40C and engaged in a non-secured manner to a distal end 40D1 of the plate 40D, with proximal ends 40C2, 40D2 of the plates 40C, 40D secured to first and second shells 32A, 32B, respectively. The reverse arrangement, with the dampers 42A, 42C secured to plates 40B, 40D instead, is contemplated. Illustratively, the distal ends 40A1, 40B1, 40C1, 40D1 include flat surfaces engaging the dampers 42A, 42C so that the dampers 42A, 42C provide face-on-face damping (i.e., in a transverse direction in line with the plates 40A-40D).

In the shown embodiment, the dampers 42A, 42C (as well as 42B, 42D) are compressible between respective distal ends 40A1, 40B1, 40C1, 40D1 of the plates 40A-40D in a transverse direction in line with the respective plates 40A-40D. As such, movement of the shells 32A, 32B is transferred through the plates 40A, 40B, 40C, 40D and damped by the compression of the dampers 42A-42D. As such, the plates 40A-40D and dampers 42A-42D provide both stiffening and dampening to the fairing 12. Various damper types are contemplated for dampers 42A-42D, such as a spring damper or an elastomeric damper. The size, material and stiffness of the dampers 42A-42D may vary, as discussed in further detail below.

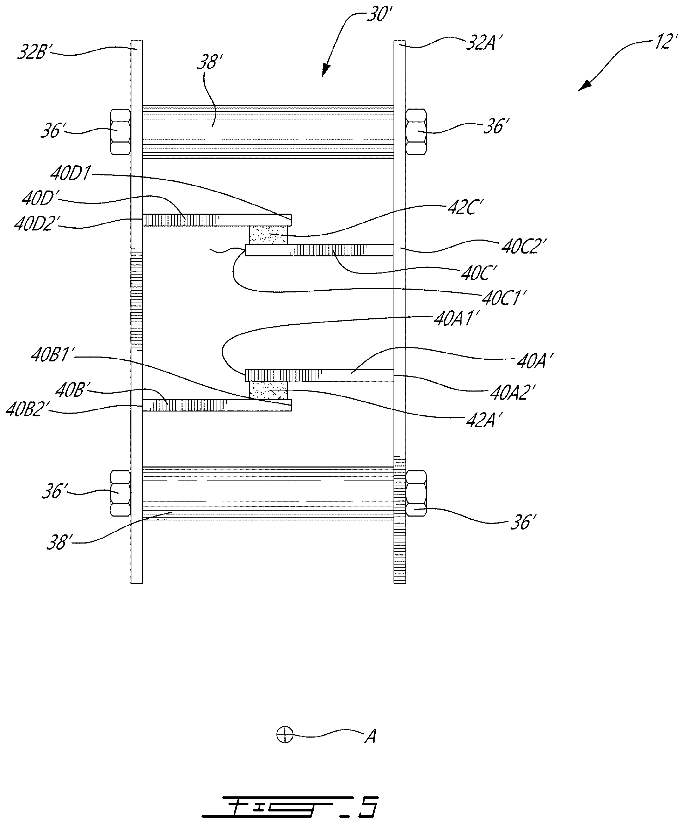

Referring to FIG. 5, another embodiment of a fairing 12' is shown in a cross-sectional view taken along line IV-IV in FIG. 3. Unless otherwise specified, like reference numerals (with an added apostrophe) refer to like components. In this view, two dampers 42A', 42C' are shown. However, it is understood that two other dampers 42B', 42D' are provided in this embodiment (akin dampers 42B, 42D shown in FIG. 3) and the following depictions applies to them as well. In this embodiment, the damper 42A' is coupled or fastened to an underside of the plate 40A' adjacent to or towards the distal end 40A1' thereof, and engaged with a top side of the plate 40B' adjacent to or towards the distal end 40B1' thereof in a non-secured (i.e., sliding) manner. Proximal ends 40A2', 40B2' of the plates 40A', 40B' are secured to first and second shells 32A', 32B', respectively. Similarly, the damper 42C' is coupled or fastened to an underside of the plate 40C' adjacent to or towards the distal end 40C1' thereof, and engaged with a top side of the plate 40D' adjacent to or towards the distal end 40D1' thereof in a non-secured (i.e., sliding) manner, with proximal ends 40C2', 40D2' of the plates 40C', 40D' secured to first and second shells 32A', 32B', respectively. Other arrangements, for instance with the dampers 42A', 42C' coupled to and/or engaged to other surfaces of the plates 40A'-40D', are contemplated. By "adjacent to" or "towards", it is understood that the dampers 42A', 42C' are disposed towards the distal ends 40A1'-40D1' with or without directly engaging the distal ends 40A1'-40D1'.

In the shown embodiment, the dampers 42A', 42C' (as well as 42B', 42D') are radially disposed between respective plates 40A'-40D' towards their distal ends 40A1'-40D1'. As movements of the shells 32A', 32B' are transferred through the plates 40A'-40D', the dampers 42A', 42C' are configured for damping this movement by providing shearing or frictional type damping, with some compression of the dampers 42A', 42C' in a direction parallel to the plates 40A'-40D'. As such, the plates 40A'-40D' and dampers 42A'-42D' provide both stiffening and dampening to the fairing 12'. Various damper types are contemplated for dampers 42A'-42D', such as an elastomeric damper. The size, material and stiffness of the dampers 42A'-42D' may vary, as discussed in further detail below.

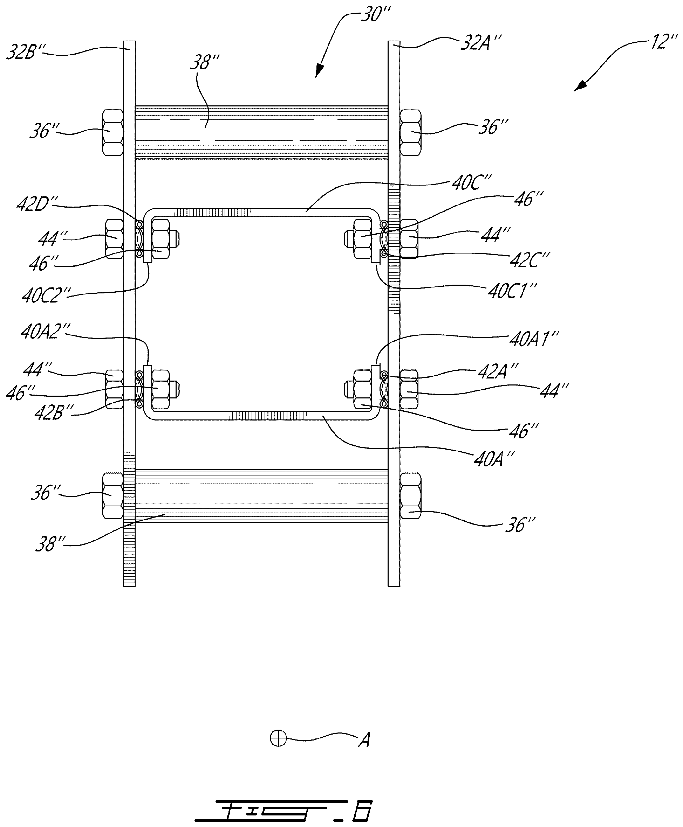

Referring to FIG. 6, another embodiment of a fairing 12" is shown in a cross-sectional view taken along line IV-IV in FIG. 3. Unless otherwise specified, like reference numerals (with an added double apostrophe) refer to like components. In this embodiment, plates 40A", 40C" each extend between and engage both the first shell 32A" and the second shell 32B", with one or more damped couplings between respective plate ends 40A1", 40A2", 40C1", 40C2" and the shells 32A", 32B". Illustratively, fasteners such as bolts 44" and nuts 46" couple a first end 40A1" of the plate 40A" to the first shell 32A", a second end 40A2" of the plate 40A" to the second shell 32B", a first end 40C1" of the plate 40C" to the first shell 32", and a second end 40C2" of the plate 40C" to the second shell 32B". One more dampers 42" are disposed around a respective shaft of the bolts 44" to provide a dampening effect to the movement of the respective shells 32A", 32B". Illustratively each bolt 44" (i.e., at ends 40A1", 40A2", 40C1", 40C2") is provided with a damper 42A", 42B", 42C", 42D" at a respective coupling with the first shell 32A" or second shell 32B". In other cases, only one end of each plate 40A", 40C" is provided with a damper 42".

In the shown case, each damper 42A"-42D" is a wave spring coupled to the fastener (e.g., disposed around a shaft of a respective bolt 44") and adapted to dampen movement between a respective outer shell 32A", 32B" and plate 40A", 40C". As such, the plates 40A", 40C;' and dampers 42A"-42D" provide both stiffening and dampening to the fairing 12". Other damper types for dampers 42A"-42D" are contemplated. The size, material and stiffness of the dampers 42A"-42D" may vary, as discussed in further detail below.

In each of the above-described embodiments, various geometric parameters (e.g., size, shape, thickness) and mechanical properties (e.g., Young's modulus, damping coefficient) of dampers 42, 42', 42" may be selected to provide a desired dynamic response. For instance, the above properties may be selected to tune the various dampers 42, 42', 42" to shift the modal frequencies of the fairings 12, 12', 12" and provide a degree of damping to reduce stresses and improve durability. In addition, the various plates 40, 40', 40" may be sized and shaped to provide a desired stiffness to the fairings 12,12', 12". In addition, the plates 40, 40', 40" may have material selectively removed or not included at locations where additional stiffness is not required and weight savings can be achieved, for instance at cutouts adjacent the supports members 34A, 34B. Other shapes for the plates 40, 40', 40" may be contemplated.

In an embodiment of the present disclosure, there is provided an exemplary method for mitigating vibrations of a fairing (e.g., fairing 12) disposed in a bypass duct 22 of a gas turbine engine 10, the fairing 12 including outer shells 32A, 32B extending between radially outer and inner shrouds 24, 26 in the bypass duct 22. A flow of air F is received in the bypass duct 22, the flow of air F interacting with the fairing 12. A damper 42 engaged with a plate 40 extending between the outer shells 32A, 32B is used to damp a vibration of the fairing 12 induced by the flow of air F in the bypass duct 22 interacting with the fairing 12.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A bypass duct (22) of a turbofan gas turbine engine (10), the bypass duct (22) comprising:
a first shroud (26) extending at least partially around an axis (A);
a second shroud (24) extending at least partially around the axis (A), the second shroud (24) being radially spaced apart from the first shroud (26) to define a bypass passage between the first (26) and second (24) shrouds; and
a fairing (12,12',12") disposed in the bypass passage, the fairing (12,12',12") including:
a first outer shell (32A,32A',32A") and a second outer shell (32B,32B',32B") defining therebetween an internal passage (30,30',30"), the first and second outer shells extending radially from the first shroud (26) to the second shroud (24);
a plate (40,40',40") extending across the internal passage (30,30',30") between the first and second outer shells; and
a damper (42,42',42") engaged with the plate (40,40',40") between the first and second outer shells.

2. The bypass duct (22) as defined in claim 1, wherein a first said plate (40A,40A') extends from the first outer shell (32A,32A') and a second said plate (40B,40B') extends from the second outer shell (32B,32B'), the first said plate (40A,40A') engaging the second said plate (40B,40B') via the damper (42A,42A',42B,42B').

3. The bypass duct (22) as defined in claim 2, wherein the damper (42A,42A') is coupled to a distal end (40A1,40A1') of the first said plate (40A,40A') and engages a distal end (40B,40B') of the second said plate (40B,40B'), the damper (42A,42A',42B,42B') compressible between the distal end (40A1,40A1') of the first said plate (40A,40A') and the distal end (40B1,40B1') of the second said plate (40B,40B').

4. The bypass duct (22) as defined in claim 3, wherein the damper (42A,42A',42B,42B') is a spring damper or an elastomeric damper disposed between the distal end (40A1,40A1') of the first said plate (40A,40A') and the distal end (40B1,40B1') of the second said plate (40B,40B'), the damper (42A,42A',42B,42B') compressible in a direction in line with the first said plate (40A,40A') and the second said plate (40B,40B') and transversal to the first (32A,32A') and second (32B,32B') outer shells of the fairing (12,12').

5. The bypass duct (22) as defined in claim 3 or 4, wherein the damper (42A,42B) is radially disposed between the first said plate (40A) and the second said plate (40B) towards the distal end (40A1) of the first said plate (40A) and the distal end (40B1) of the second said plate (40B).

6. The bypass duct (22) as defined in any of claims 3 to 5, wherein the damper (42A',42B') is an elastomeric damper coupled to an underside of the first said plate (40A') towards the distal end (40A1') of the first said plate (40A') and engaging a top side of the second said plate (40B') towards the distal end (40B1') of the second said plate (40B').

7. The bypass duct (22) as defined in claim 1, wherein the plate (40A") engages the first outer shell (32A") and the second outer shell (32B"), the plate (40A") coupled to the first outer shell (32A") via the damper (42A",42B").

8. The bypass duct (22) as defined in claim 7, further comprising a fastener (44",46") coupling the first outer shell (32A") and the plate (40A"), wherein the damper (42A",42B") includes a wave spring coupled to the fastener (44",46") and damping movement between the first outer shell (32A") and the plate (40A").

9. The bypass duct (22) as defined in claim 7, further comprising a second said damper (42B") coupling the plate (40A") to the second outer shell (32B").

10. The bypass duct (22) as defined in any preceding claim, further comprising a second said plate (40C,40D,40C',40D',40C") disposed between the first (32A,32A",32A") and second (32B,32B',32B") outer shells, the second said plate (40C,40D,40C',40D',40C") radially spaced apart from the plate (40,40',40") and engaged with a second damper (42C,42D,42C',42D',42C",42D") to dampen movement of the first (32A,32A',32A") and second (32B,32B',32B") outer shells.

11. A turbofan gas turbine engine (10) comprising:
a fan (14) through which ambient air is propelled;
a core including a compressor (16) for pressurizing a first portion of the air propelled by the fan (14), a combustor (18) in which the pressurized air is mixed with fuel and ignited for generating an annular stream of hot combustion gases, and a turbine section (20) for extracting energy from the combustion gases; and
a bypass duct (22) as defined in any preceding claim.

12. A method for mitigating vibrations of a fairing (12,12',12") disposed in a bypass duct (22) of a gas turbine engine (10), the fairing (12,12',12") including outer shells (32A,32A',32A",32B,32B',32B") extending between radially inner (26) and outer (24) shrouds in the bypass duct (22), the method comprising:
receiving a flow of air (F) in the bypass duct (22), the flow of air (F) interacting with the fairing (12,12',12"); and
using a damper (42,42',42") engaged with a plate (40,40',40") extending between the outer shells (32A,32A',32A",32B,32B',32B") to damp a vibration of the fairing (12,12',12") induced by the flow of air (F) in the bypass duct (22) interacting with the fairing (12,12',12").

13. The method as defined in claim 12, wherein the using the damper (42,42') engaged with the plate (40,40') extending between the outer shells (32A,32A',32B,32B') includes using a first said plate (40A,40A') extending from a first (32A,32A') of the outer shells and a second said plate (40B,40B') extending from a second (32B,32B') of the outer shells, the first said plate (40A,40A') engaging the second said plate (40B,40B') via the damper (42A,42A',42B,42B'), to damp the vibration of the fairing (12,12') induced by the flow of air in the bypass duct (22) interacting with the fairing (12,12').

14. The method as defined in claim 12, wherein the using the damper (42") engaged with the plate (40") extending between the outer shells (32A",32B") includes using the plate (40") engaging a first (32A") of the outer shells and a second (32B") of the outer shells, the plate (40A") coupled to the first (32A") of the outer shells via the damper, to damp the vibration of the fairing (12") induced by the flow of air in the bypass duct (22) interacting with the fairing (12").

15. The method as defined in claim 12 to 14, wherein the using the damper (42,42',42") engaged with the plate (40,40',40") extending between the outer shells (32A,32A',32A",32B,32B',32B") includes using a second said plate (40C,40D,40C',40D',40C") disposed between the outer shells (32A,32A',32A",32B,32B',32B"), the second said plate (40C,40D,40C',40D',40C") radially spaced apart from the plate (40,40',40") and engaged with a second damper (42C,42D,42C',42D',42C",42D") to dampen movement of the outer shells (32A,32A',32A",32B,32B',32B"), to damp the vibration of the fairing (12,12,',12") induced by the flow of air in the bypass duct (22) interacting with the fairing (12,12',12").
